(19) **Europäisches Patentamt European Patent Office Office européen des brevets**

(11) **EP 1 315 979 B1**

(12) **EUROPÄISCHE PATENTSCHRIFT**

(45) Veröffentlichungstag und Bekanntmachung des Hinweises auf die Patenterteilung:
**11.04.2007 Patentblatt 2007/15**

(21) Anmeldenummer: **01971659.6**

(22) Anmeldetag: **31.08.2001**

(51) Int Cl.:
*G01S 11/04* (2006.01)    *G01B 7/30* (2006.01)

(86) Internationale Anmeldenummer:
**PCT/DE2001/003291**

(87) Internationale Veröffentlichungsnummer:
**WO 2002/018971 (07.03.2002 Gazette 2002/10)**

(54) **VERFAHREN ZUR BESTIMMUNG EINES DREHWINKELS ODER ABSTANDES DURCH AUSWERTUNG VON PHASENMESSWERTEN**

METHOD FOR DETERMINING A ROTATIONAL ANGLE OR A DISTANCE BY EVALUATING PHASE MEASURED VALUES

PROCEDE POUR DETERMINER UN ANGLE DE ROTATION OU UN ECARTEMENT PAR EVALUATION DE VALEURS DE MESURE DE PHASE

(84) Benannte Vertragsstaaten:
**DE ES FR GB IT**

(30) Priorität: **31.08.2000 DE 10042660**

(43) Veröffentlichungstag der Anmeldung:
**04.06.2003 Patentblatt 2003/23**

(73) Patentinhaber: **ROBERT BOSCH GMBH**
**70442 Stuttgart (DE)**

(72) Erfinder:
 • **STEINLECHNER, Siegbert**
   **71229 Leonberg (DE)**
 • **WENZLER, Axel**
   **71229 Leonberg (DE)**

(56) Entgegenhaltungen:
**EP-A- 0 693 693**

**Beschreibung**

Stand der Technik

Bei einigen technischen Messaufgaben entstehen mehrere Phasenmesswerte, aus denen die zu messende Größe, wie z.B. ein Winkel oder der Abstand zu einem Ziel, zu bestimmen ist.

Beispiele hierzu sind:

- Entfernungsmessung mit RADAR oder mit moduliertem Laserlicht. Es werden N Messungen mit verschiedenen Frequenzen $f_1..f_N$ durchgeführt. Die vom Ziel im Abstand x reflektierten Signale besitzen am Empfängerort die Phasenverschiebungen (c=Lichtgeschwindigkeit):

$$\alpha_i = \frac{2 \cdot \pi \cdot f_i \cdot 2 \cdot x}{c}$$

Die Phasenverschiebungen sind also der zu messenden Größe und der benutzten Frequenz proportional. Jedoch liegen die tatsächlichen Messwerte der Phasen immer im Bereich 0 bis $2\pi$, sind also immer nur bis auf ganzzahlige Vielfache von $2\pi$ bestimmt.

- optischer Winkelgeber: Abtastung von N optischen Strichgittern. Auf einer Scheibe oder einem Zylinder sind N Spuren mit optischen Strichgittern aufgebracht. Auf eine Umdrehung kommen dabei jeweils $n_i$ Perioden bzw. Striche. Mißt man die Phasenlagen der Spuren mit Hilfe optoelektronischer Detektoren relativ zu einem feststehenden Messfenster, erhält man die Phasenlagen:

$$\alpha = n_i \cdot \phi$$

Die Phasen sind also dem Verdrehwinkel $\phi$ und den Periodenzahlen $n_i$ proportional. Auch hier liegen die tatsächlichen Meßwerte der Phasen immer im Bereich 0 bis $2\pi$.

Zur Auswertung solcher Signale, also der Bestimmung x bzw. $\phi$ sind folgende Methoden bekannt:

- klassisches Noniusverfahren:

  Aus je 2 Meßwinkeln wird die Differenz gebildet; falls sie kleiner 0 ist, wird $2\pi$ addiert. Dieses Verfahren hat starke Einschränkungen: Meßfehler in den Winkeln schlagen voll auf das Endergebnis durch, außerdem funktioniert das Verfahren nur, wenn die beiden betrachteten Periodenzahlen sich um genau 1 unterscheiden.

- modifiziertes Noniusverfahren (siehe DE P 19506938):

  Aus je 2 Meßwinkeln wird durch gewichtete Addition und die weitere Addition einer winkelbereichsabhängigen Konstanten der Wert der zu messenden Größe bestimmt. Der
  Vorteil liegt darin, dass Meßfehler in den Winkeln um einen Faktor <1 reduziert werden.

- kaskadiertes, modifiziertes Noniusverfahren:

  Das modifizierte Noniusverfahren wird für mehrere Spuren in einer hierarchischen Anordnung mehrfach angewandt.

Aufgabe der Erfindung

Die Aufgabe der Erfindung ist die Gewinnung eines optimalen, eindeutigen Phasenmesswerts aus N mehrdeutigen, gestörten Phasensignalen $\alpha_i$, wobei die Nachteile der bekannten Methoden umgangen werden.

Mögliche Einsatzbereiche sind Aufgaben, bei denen aus mehreren Phasensignalen ein hochgenauer und robuster Meßwert ermittelt werden muß, wie z.B.:

- die Mehrfrequenz-Entfernungsmessung
- die Winkelmessung
- die kombinierte Winkel- und Drehmomentmessung

unter Einsatz von RADAR, Laser, optischen, magnetischen oder sonstigen Sensorprinzipien.

Vorteile der Erfindung

Die Erfindung ermöglicht die direkte, optimale, nichthierarchische Auswertung von N Phasensignalen.

Es können dabei im Gegensatz zu den bekannten Verfahren nahezu beliebige Periodenzahlen $n_i$ eingesetzt werden. Meßfehler in den einzelnen Phasensignalen werden deutlich reduziert. Durch Hinzunahme weiterer Phasenspuren kann eine deutlich erhöhte Tolerzan gegen Meßfehler erreicht werden.

Die Erfindung ist insbesondere dazu geeignet, die Signale eines optischen TAS (Torque-Angle-Sensor) optimal auszuwerten.

Detaillierte Beschreibung

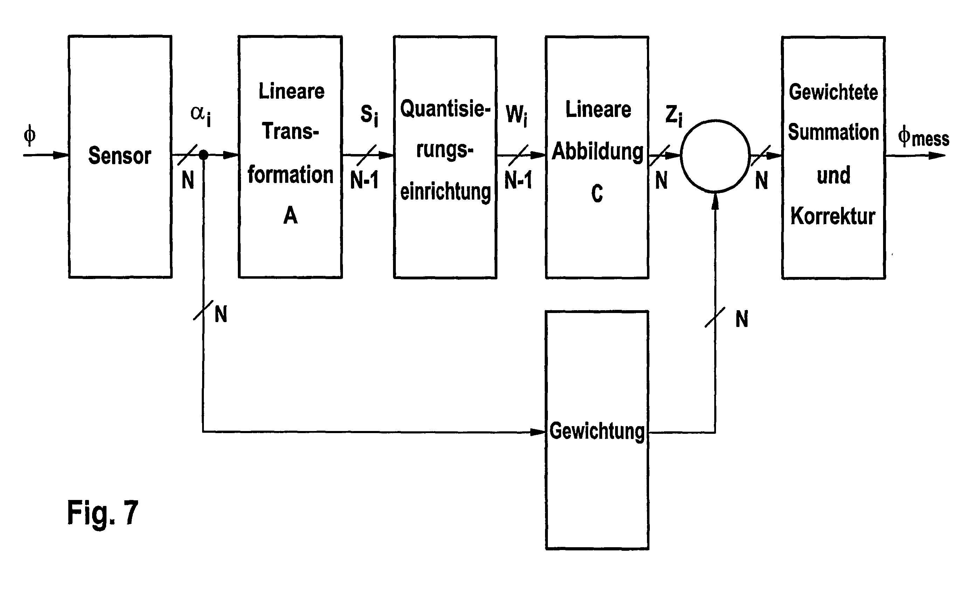

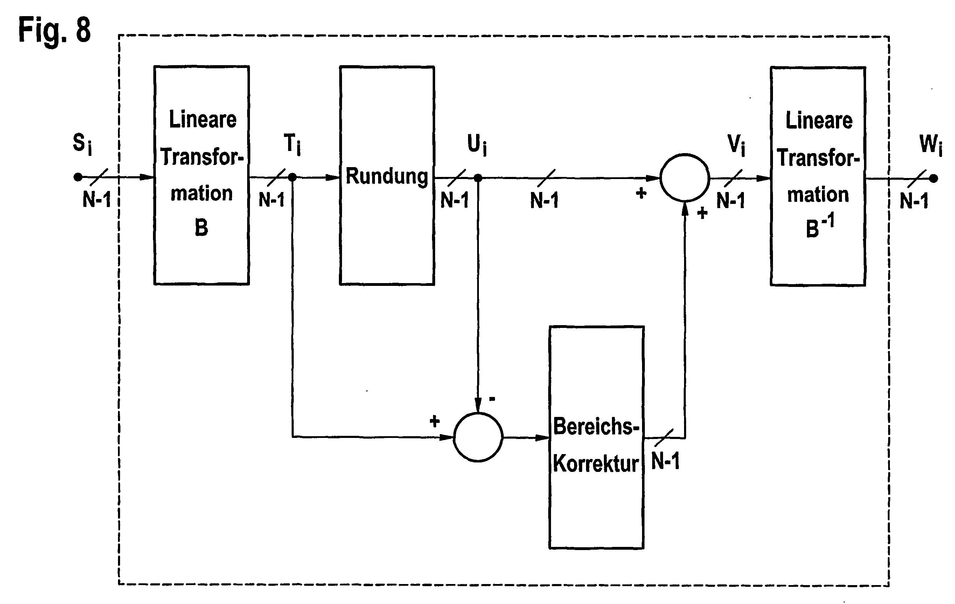

Figur 7 zeigt das Blockschaltbild, Figur 8 ein Detail der Erfindung.

Ein.Sensor (Figur 7, z.B. optischer Winkelsensor mit N Spuren) liefert die N gemessenen Winkelwerte $\alpha_i$, i=1..N. Wenn er zu bestimmende mechanische Verdrehwinkel eine Umdrehung ($2\pi$) überstreicht, überstreichen die Phasenwinkel $\alpha_i$ $n_1$ ..$n_N$ mal den Meßbereich $2\pi$. Die Werte $n_1$..$n_N$ sind die Periodenzahlen der einzelnen Spuren.

Die im Regelfall digital vorliegenden Winkelwerte werden zunächst einer einfachen linearen Transformation *A* unterworfen. Diese bildet aus den N Winkelwerten N-1 neue Signale $S_i$ so, dass ideale Winkelwerte in ein ganzzahliges, (N-1)-dimensionales Raster abgebildet werden. Beispielsweise kann die Transformation folgendermaßen ausgeführt werden:

$$S_i = \frac{\alpha_{i+1} \cdot n_i - \alpha_i \cdot n_{i+1}}{2 \cdot \pi \cdot ggT(n_i, n_{i+1})}$$

Hierbei ist ggT der größte gemeinsame Teiler der entsprechenden Zahlen.

Falls Meßfehler in den Winkelwerten auftreten, führt dies dazu, dass die Signale $S_i$ nicht exakt auf, sondern nur in der Nähe des ganzzahligen Rasters liegen. Mit Hilfe einer Quantisierungseinrichtung werden die Signale $S_i$ auf die ganzzahligen Werte $W_i$, die auf dem erwähnte Raster liegen, abgebildet und dadurch die Effekte der Meßfehler eliminiert.

Anschließend werden die (N-1) Werte Wi einer einfachen linearen Abbildung *C* unterworfen, die N reelle Werte $Z_i$ liefert. Diese Werte $Z_i$ sind der Anzahl der durchlaufenen Perioden des entsprechenden Winkelwerts $\alpha_i$ proportional.

Zu diesen Werten $Z_i$ werden die gewichteten Winkelwerte $\alpha_i$ addiert. Diese Addition erfolgt modulo $2\pi$. Die Gewichtungsfaktoren und die erwähnte lineare Abbildung *C* werden so gewählt, dass man nach der Addition N Schätzwerte für den zu messenden Winkel $\phi$ erhält.

Nun werden diese Schätzwerte gewichtet aufsummiert. In manchen Fällen ist hierbei eine Korrektur vorzunehmen, da Winkelwerte in der Nähe von 0 und in der Nähe von $2\pi$ als benachbart gelten müssen.

Beispiel: 2 Werte von $0.01\pi$ und $1.97\pi$ sind mit den Gewichten von je 0.5 zu addieren.

$$(0.01\pi + 2\pi )/ 2 + 1.97\pi = 1.99\pi$$

d.h. zu einem Wert wird $2\pi$ addiert, um ihn in die Nähe des anderen zu bringen.

Schließlich steht der optimale Meßwert $\phi_{mess}$ zur Verfügung.

Figur 8 zeigt das Blockschaltbild der oben genannten Quantisierungseinrichtung.

Die Signale $S_i$ liegen, wie erwähnt, in der Nähe eines ganzzahligen Rasters. Häufig werden, abhängig von den Periodenzahlen und von den Transformationen, jedoch nur ganz bestimmte Positionen des ganzzahligen Rasters belegt. Eine direkte Rundung der Werte $S_i$ würde häufig zu falschen Ergebnissen führen, da die Rundung auch auf Rasterpunkte führt, die nicht erlaubt sind. Aus diesem Grund werden die Werte $S_i$ durch eine einfache Transformation *B* in die Werte Ti überführt, wobei die Werte Ti ebenfalls in der Nähe ganzzahliger Rasterpunkte liegen, jedoch mit dem Unterschied, dass alle ganzzahligen Rasterpositionen erlaubt sind.

Eine Rundung der Werte $T_i$ führt diese in die N-1 ganzzahligen Werte $U_i$ über, die die Zugehörigkeit eines Meßpunktes zu einem Rasterpunkt beschreiben.

Es kann jedoch weiterhin vorkommen, dass die jeweilige Rundung der $T_i$ auf einen Wert $U_i$ führt, der um 1 zu groß oder zu klein ist. Deshalb wird zunächst die Differenz $T_i-U_i$ (i=1..N-1) gebildet, die den Abstand des Meßpunkts zu dem gerundeten Rasterpunkt in der Richtung i beschreibt. Diese. Abstände werden in einer Bereichskorrektureinrichtung mit vorgegebenen Grenzen verglichen und dabei entschieden, ob der Meßwert einem Nachbarpunkt des Rasters zugeordnet werden muß. Dadurch entstehen N-1 Korrekturwerte, welche die Werte -1, o oder 1 annehmen können. Diese Korrekturwerte werden zu dem $U_i$ addiert und ergeben die korrigierten Werte $V_i$.

Die korrigierten Werte werden nun durch einfache Transformation $B^{-1}$ auf das ursprüngliche Raster, in dem die Werte $S_i$ im Idealfall liegen, zurücktransformiert. $B^{-1}$ ist die genaue Umkehrung der Transformation $B$.

### Beispiel für N=3 Spuren

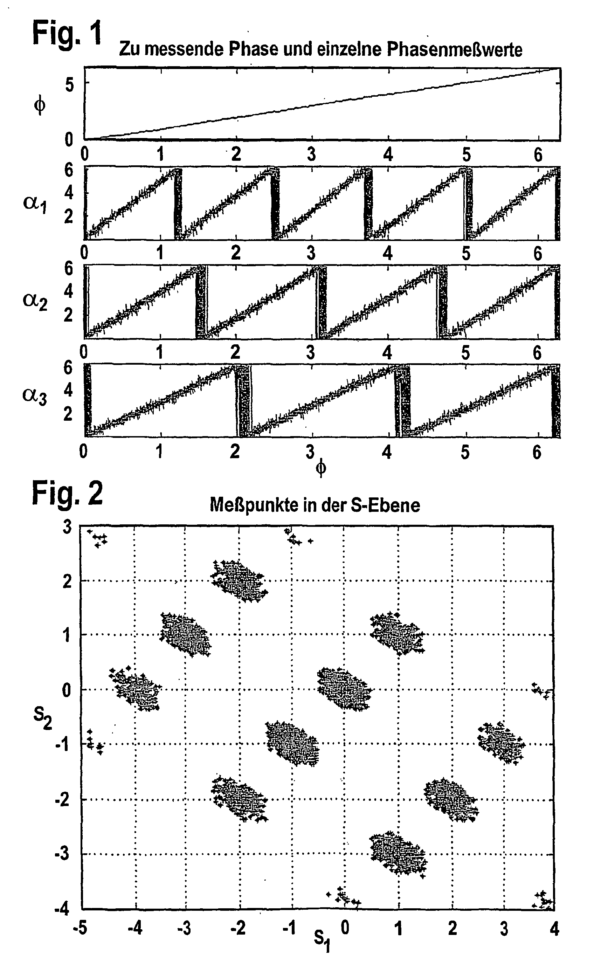

Die Periodenanzhalen sind $n_1=5$, $n_2=4$, $n_3=3$. Figur 1 zeigt oben den zu bestimmenden Verlauf des mechanischen Winkels $\phi$, unten den Verlauf der drei (mit Meßfehlern von $\pm$ 20° behafteten) Phasenmeßwerte $\alpha_i$.
Die Transformation A lautet in Matrizenschreibweise:

$$A = \frac{1}{2\cdot\pi}\cdot\begin{bmatrix} 4 & -5 & 0 \\ 0 & 3 & -4 \end{bmatrix}$$

$$\begin{bmatrix} S_1 \\ S_2 \end{bmatrix} = A \cdot \begin{bmatrix} \alpha_1 \\ \alpha_2 \\ \alpha_3 \end{bmatrix}$$

Figur 2 zeigt die Punkte S nach der Transformation.

Figur 3 zeigt die in die T-Ebene abgebildeten Meßpunkte. Die notwendige Transformation $B$ lautet in Matrizenschreibweise:

$$B = \frac{1}{4}\cdot\begin{bmatrix} 2 & 2 \\ 1 & -1 \end{bmatrix}$$

$$\begin{bmatrix} T_1 \\ T_2 \end{bmatrix} = B \cdot \begin{bmatrix} S_1 \\ S_2 \end{bmatrix}$$

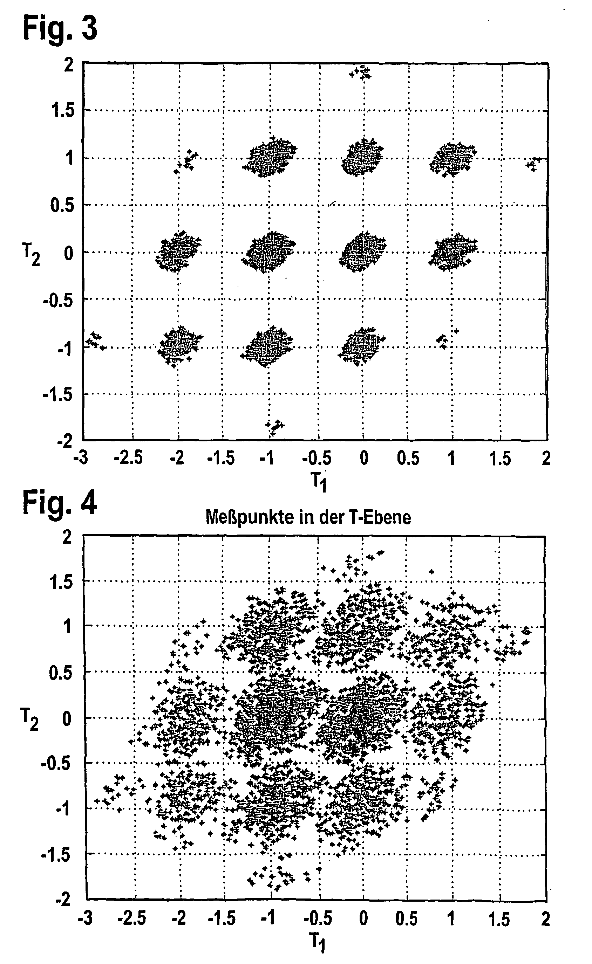

Um die notwendige Bereichskorrektur zu erläutern, zeigt Figur 4 die T-Ebene bei höheren Meßfehlern von $\pm 45°$, $\pm 60°$ und $\pm 45°$.

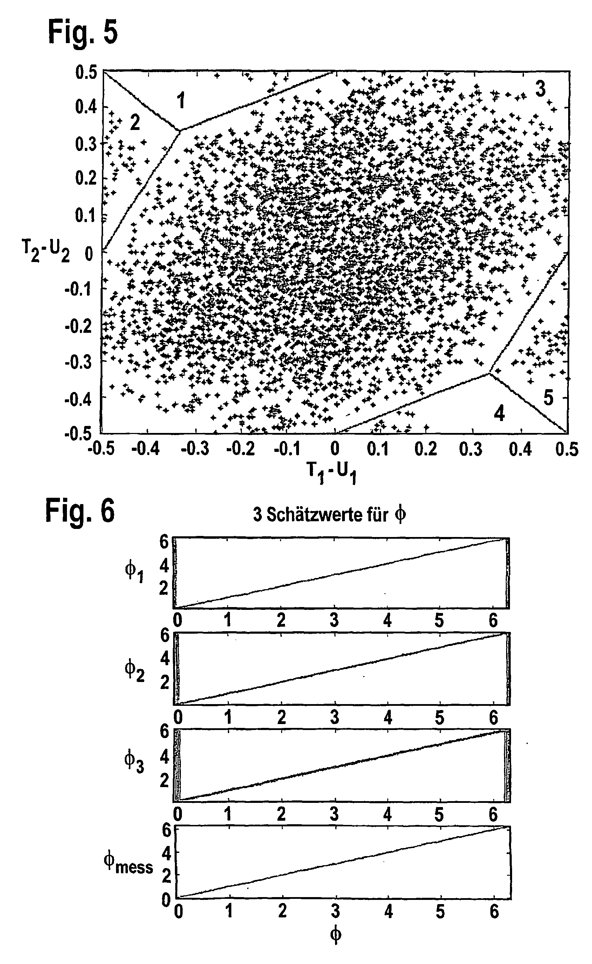

Die nun folgende Rundung auf ganzzahlige Werte ergibt aufgrund der Kontur in manchen Fällen eine fehlerhafte Zuordnung. Figur 5 zeigt die ($T\text{-}U$) Ebene mit einer Zoneneinteilung. In der mittleren Zone (3) war die Rundung erfolgreich, in den Zonen 1, 2, 4, 5 sind Korrekturen notwendig, die von der Bereichskorrektureinrichtung berechnet und anschließend zu den U-Werten addiert werden:

| Zone | Aktion | |
|---|---|---|
| 1 | $V_1=U_1$ | $V_2\text{-}U_2+1$ |

(fortgesetzt)

| Zone | Aktion | |
|------|--------|--|
| 2 | $V_1=U_1-1$ | $V_2=U_2$ |
| 3 | $V_1=U_1$ | $V_2=U_2$ |
| 4 | $V_1=U_1$ | $V_2=U_2-1$ |
| 5 | $V_1=U_1+1$ | $V_2=U_2$ |

Die Zonen werden abhängig von den Periodenzahlen so gewählt, dass bis zu einem maximal zulässigen Meßfehler der Phasenwerte kein Rastersprung erfolgt.

Die nachfolgende Transformation $B^{-1}$ hat die Form:

$$B^{-1} = \begin{bmatrix} 1 & 2 \\ 1 & -2 \end{bmatrix}$$

$$\begin{bmatrix} W_1 \\ W_2 \end{bmatrix} = B^{-1} \cdot \begin{bmatrix} V_1 \\ V_2 \end{bmatrix}$$

Die lineare Abbildung $C$ hat die Form:

$$C = 2 \cdot \pi \cdot \begin{bmatrix} \dfrac{1}{5} & 0 \\ \dfrac{1}{4} & 0 \\ 0 & \dfrac{1}{3} \end{bmatrix}$$

$$\begin{bmatrix} Z_1 \\ Z_2 \\ Z_3 \end{bmatrix} = C \cdot \begin{bmatrix} W_1 \\ W_2 \end{bmatrix}$$

Nach der Gewichtung der Meßwerte $\alpha_i$ werden diese zu den Werten $Z_i$ addiert. Die Addition erfolgt modulo $2\pi$. Dabei entstehen die N Schätzwerte für den Winkel $\phi$. Die Gewichte für die Winkelwerte $\alpha_1$, $\alpha_2$, $\alpha_3$ sind hierbei 1/5, ¼ und 1/3.

Figur 6 zeigt die 3 entstehenden Schätzwerte, darunter ist deren (korrigierter) Mittelwerte dargestellt, der die Meßgröße repräsentiert.

Ausgestaltungen

- Werden die Winkelwerte binär auf $2\pi$ normiert dargestellt, sind alle erforderlichen Multiplikationen ganzzahlig oder rational ausführbar

- Die Bereichskorrektur der Quantisierungseinrichtung kann durch Berechnung (Vergleich des Meßpunkts mit den Bereichsgrenzen) oder durch Tabellierung (z.B: ROM-Tabelle) erreicht werden

- Das Verfahren ist besonders geeignet für TAS (Torque-Angle-Sensor)

- Bei geeigneter Wahl der Periodenzahlen sind auch Ausgangssignale erzielbar, die über eine Umdrehung mehr als eine Periode erzeugen

- Die erforderlichen Transformationsmatrizen $A$, $B$, $B^{-1}$, $C$ und die Bereichsgrenzen der Bereichskorrektur müssen nur einmalig beim Systementwurf bestimmt werden

- Das Verfahren läßt sich auch auf andere Systeme übertragen, die entsprechende Ausgangssignale liefern, wie z.B. Lineargeber, Mehrfrequenz-Abstandsmeßsysteme

- Die nacheinander auszuführenden Transformationen bzw. Abbildungen lassen sich vorteilhaft zusammenfassen, z.B. $(B^*A)$, $(C^*B^{-1})$, was den Aufwand reduziert

- Im ausgeführten Beispiel dürfen die Meßfehler in den Meßsignalen $\alpha_{1..3}$ gleichzeitig bis zu +45°, +60°, +45° betragen. Bekannte Verfahren erreichen diese Fehlertoleranz bei weitem nicht.

**Patentansprüche**

1. Verfahren zur Bestimmung eines Drehwinkels oder Abstandes durch Auswertung von einer Vielzahl von Phasenmesswerten, die beim Abtasten eines Gebers von einem Sensor aufgenommen werden, **dadurch gekennzeichnet, dass** die Phasenmesswerte in nachfolgenden Schritten ausgewertet werden:

   Ein Sensor liefert N gemessene Phasenmesswerte $\alpha_i = \varphi \cdot n_i$ jeweils im Bereich 0 bis $2\pi$, wobei $n_i$ die Anzahl der Perioden ist,
   die vorliegenden Phasenmesswerte $\alpha_i$ werden mittels einer linearen Transformation A in N-1 neue Signale $S_i$ in einem N-1 dimensionalen Raum abgebildet,
   die N-1 abgebildeten Signale werden mit einer Quantisierungseinrichtung in N-1 ganzzahlige Werte $W_i$ transformiert, die auf einem Raster liegen, die transformierten N-1 Werte $W_i$ werden mittels einer linearen Abbildung $C$ in N reelle Werte $Z_i$ umgeformt,
   zu den N reellen Werten $Z_i$ werden gewichtete Phasenmesswerte $\alpha_i$ modulo $2\pi$ addiert, wodurch man N Schätzwerte für den zu messenden Winkel $\varphi$ erhält
   und die N Schätzwerte für den zu messenden Winkel $\varphi$ werden ggf. an ihren Sprungstellen korrigiert und unter Berücksichtigung ihres Phasenwinkels gewichtet aufsummiert.

2. Verfahren zur Bestimmung eines Drehwinkels oder Abstandes durch Auswertung von einer Vielzahl von Phasenmesswerten, nach Anspruch 1, **dadurch gekennzeichnet, dass** die Auswertung nach dem klassischen Noniusverfahren oder einem modifizierten Noniusverfahren oder einem kaskadierten, modifizierten Noniusverfahren erfolgt.

**Claims**

1. Method for determination of a rotation angle or distance by evaluation of a large number of phase measurement values, which are recorded during scanning or sampling of a transmitter by a sensor, **characterized in that** the phase measurement values are evaluated in the following steps:

   a sensor supplies N measured phase measurement values $\alpha_i = \varphi \cdot n_i$ in each case in the range 0 to $2\pi$, where $n_i$ is the number of periods,
   the present phase measurement values $\alpha_i$ are mapped by means of a linear transformation A onto N-1 new signals $S_i$ in an N-1 dimensional space,
   the N-1 mapped signals are transformed by a quantization device into N-1 integral values $W_i$, which lie on a grid, the transformed N-1 values $W_i$ are converted by means of a linear map C to N real values $Z_i$,

weighted phase measurement values $\alpha_i$ are modulo-$2\pi$ added to the N real values $Z_i$, thus resulting in N estimated values for the angle $\varphi$ to be measured,

and the N estimated values for the angle $\varphi$ to be measured are if necessary corrected at their discontinuity points and are added up weighted to take account of their phase angle.

**2.** Method for determination of a rotation angle or distance by evaluation of a large number of phase measurement values, according to Claim 1, **characterized in that** the evaluation is carried out on the basis of the classical nonius method, or a modified nonius method, or a cascaded, modified nonius method.

**Revendications**

**1.** Procédé pour déterminer un angle de rotation ou un écartement par évaluation d'une pluralité de valeurs de mesure de phase enregistrées par un capteur lors de l'échantillonnage d'un transmetteur,
**caractérisé en ce qu'**
on exploite les valeurs de mesure de phase selon les étapes suivantes :

- un capteur fournit N valeurs de mesure de phase mesurées $\alpha_i = \varphi \cdot n_i$, chacune étant située dans la plage allant de 0 à $2\pi$, où $n_i$ est le nombre de périodes,
- les valeurs de mesure de phase existantes $\alpha_i$ sont projetées en N-1 nouveaux signaux $S_i$ dans un espace N-1-dimensionnel au moyen d'une transformation linéaire $A$,
- les N-1 signaux projetés sont transformés, par un dispositif de quantification, en N-1 valeurs entières $W_i$ qui se situent sur une trame et les N-1 valeurs transformées $W_i$ sont converties en N valeurs réelles $Z_i$ au moyen d'une projection linéaire $C$,
- on ajoute aux N valeurs réelles $Z_i$, des valeurs de mesure de phase pondérées $\alpha_i$ modulo $2\pi$, ce qui donne N valeurs estimées de l'angle $\varphi$ à mesurer, et
- ces N valeurs estimées de l'angle $\varphi$ à mesurer sont éventuellement corrigées au niveau de leurs discontinuités et sont additionnées en étant pondérées en prenant en compte leur angle de phase.

**2.** Procédé pour déterminer un angle de rotation ou un écartement par évaluation d'une pluralité de valeurs de mesure de phase selon la revendication 1,
**caractérisé en ce qu'**
on réalise l'exploitation selon le principe du vernier classique, ou un principe du vernier modifié ou un principe du vernier modifié et en cascade.

EP 1 315 979 B1

# Fig. 1

## Zu messende Phase und einzelne Phasenmeßwerte

# Fig. 2

## Meßpunkte in der S-Ebene

## Fig. 3

## Fig. 4

Meßpunkte in der T-Ebene

## Fig. 5

## Fig. 6

3 Schätzwerte für φ

Fig. 7

**Fig. 8**

EP 1 315 979 B1